# EUROPEAN PATENT APPLICATION

(11) **EP 0 924 673 A1**
(43) Date of publication of application: **23.06.1999**
(21) Application number: 98123909.8
(22) Date of filing: 16.12.1998
(51) Int. Cl.: G09B 23/00, B62D 65/00

(54) **Method for production of reduced-scale models of vehicles, and semifinished product and model which can be obtained by means of this method**

(30) Priority: 16.12.1997 IT TO971103
(71) Applicant: FIAT AUTO S.p.A., 10135 Torino (IT)
(72) Inventor: Hamnett, Rudyard, 10024 Moncalieri (IT)
(74) Representative: Plebani, Rinaldo

(57) **Abstract**

For each category of vehicle to be reproduced (for example for vehicles in sections A-B, C-D, D-E) one or more semifinished products (3a, 3b) are produced, each comprising a block (4) which is substantially parallelepiped and consists of a material which can easily be machined by milling, for example which is made of plastics, with dimensions, to scale and without requiring a predetermined size allowance, which correspond to the standard dimensions for the category of vehicle to be reproduced; the block is divided transversely in half into two half-blocks (4a, 4b), which are juxtaposed and attached to a milling surface and milled on a first face (10), in order to cut from inside the block (4) one or more cavities (7, 8) and at least one stop surface (11; 13); the two half-blocks are then connected to one another by means of a self-locking coupling, for example of the dovetail type (5), and two inner lateral plates (14), then are turned by 180° and milled on the outer surfaces in order to cut out a style profile (P) which reproduces the required bodywork shape, including the wheel openings (19); at this point, in the case of models which are designed for technical tests, recesses (16, 32, 40) are cut out for the instrumentation, the axles and the air intakes, the plates (14) are removed, and a support plate (20) which is provided with the axles and wheels is inserted against the stop surface (11), whereas models which are designed for display are provided with fixed wheels and a flat base which is fitted against the stop surface (13).

## Description

The present invention relates to a method for production of reduced-scale models of any vehicle (cars, railway carriages, vans etc), in particular to be used for aerodynamic tests in wind tunnels. The invention also relates to a semifinished production and to the model obtained by means of the said method.

It is known that the aerodynamic performance of new vehicles, and in particular of cars, is studied experimentally as early as in the design stage, with the help of scale models which reproduce the shape of the vehicle being designed, which are tested in a suitable system which is known as a "wind tunnel". In fact on the basis of the experimental results, the engineers can improve the design, making the necessary stylistic corrections to the shape, such as to optimise the results and thus obtain low coefficients of aerodynamic penetration, and therefore vehicles which can guarantee high speeds without producing annoying swishing noise and/or giving rise to high fuel consumption. Scale models are also used for less "technical" purposes, such as in exhibitions, shows etc.

At present, scale models are produced entirely by craftsmen. Firstly, a carpenter makes a wooden box with the dimensions necessary to contain the instruments to be used during the tests in the wind tunnel, known as the "test balance"; the box, which has a parallelepiped shape, also has the task of simulating the "significant" part of the engine space of the vehicle to be reproduced, by means of its own concavity which is left free by the test balance.

Here and in the following description, the "significant part" of an engine space of a vehicle means the part of the engine space (usually the part which accommodates the power block and the front wheels), the volume and/or shape of which can affect significantly the aerodynamic performance of the vehicle.

Therefore, in accordance with the above description, the box of each model is produced to size. Subsequently, there are attached to this box, which also acts as a support structure for the model, one or a plurality of blocks of a plastics material which can easily be machined by a machine tool, such as "Cibatul®" or "Epowood®", or any other suitable material; these blocks are then machined by being milled, in order to obtain scale reproduction of the shape of the various parts of the bodywork of the vehicle required, until a finished model is obtained.

The known method described involves many disadvantages. Firstly, the time for preparation of the models is somewhat lengthy, such that the cost is high, and furthermore the model is not available immediately; in addition, since the part of the model which is designed to be machined by a tool is placed on the wooden box, in general it does not have any accurate references, such that in order to machine the bodywork profile, it is difficult to use automatic machining systems, such as numerical control milling cutters which are controlled directly by the data which can be obtained from the data base which originates from the CAD design (CIM).

Finally, the models thus obtained have aerodynamic performance levels which do not conform entirely to those of the vehicle reproduced, in particular in cases when the contribution of the "significant" part of the engine space and of the layout of the service systems (petrol tubing, exhaust pipe, catalyst etc) on the base of the car, is a determining factor in the aerodynamic performance.

The object of the invention is to provide a method for fast production and at a low cost, of scale models of vehicles; a further object of the invention is to obtain models which have aerodynamic performance levels which are altogether comparable to those of the vehicles reproduced.

On the basis of the present invention, a method is thus provided for production of reduced-scale models of vehicles, characterised in that it comprises the following steps:
- production, for each dimensional category of vehicle to be reproduced, of at least one block which is substantially parallelepiped and is made of a material which is relatively soft and workable, and preferably a synthetic plastics material, the block being formed with pre-determined dimensions which are proportional to the corresponding dimensions of the category of vehicle to be reproduced;
- subdivision of the block by transverse cutting into two half-blocks along a cutting plane;
- securing the two half-blocks juxtaposed head to head on a machining surface and execution of initial milling in order to cut one or more cavities from a first surface of the block, which is perpendicular to the cutting surface, and at least one stop surface, which is parallel to the said first face;
- providing the said half-blocks with reciprocal means of connection which consist of a system of self-locking dovetailing with one another;
- connecting the half-blocks to one another head to head by means of the said connection means and first, detachable reinforcement means, such as to reconstitute the said block and to form a semifinished product which has, to scale, substantially the dimensions of the vehicle to be reproduced;
- tilting the said semifinished product by 180°, securing it to a machining surface, and carrying out second milling on the outer surface of the block, in order to cut to scale from the latter a style profile for the vehicle to be reproduced; and
- connecting the necessary accessory components to the said semifinished product, which is provided with the said style profile.

By this means, it is possible to produce a given number of semifinished products which have a standardised shape and dimensions, which are suitable for production in each category, for example that of cars (sections A, B, C-D etc), of the model of a vehicle which can have any shape, provided that it belongs to that category (which is usually in fact distinguished by the dimensions of the bodywork); these standard semifinished products, which can be produced easily and at a low cost, can be stored or produced immediately, having stored only the data necessary in order to reproduce them, and are then retrieved when the specific model needs to be obtained in order to be finished by being milled, with absorption of the stresses by means of the aforementioned reinforcement means; the latter can be maintained unaltered in the case of models which are designed for shows, or they can be replaced by a support plate, which also supports the various accessories (wheels, instruments etc), in the case of models which are designed for aerodynamic tests.

By means of the above-described design methodology, it is possible to decrease the costs by economies of scale, to guarantee the reproducibility of the results, in particular by providing the said blocks with an outer reference grid which can be used for correct positioning of the block during the successive milling operations, and also to make it possible to convert quickly and economically a model which is designed for tests in a wind tunnel into one which is designed for exhibitions (or vice versa), or to create a new model by salvaging an old one which is no longer in use, replacing the style profile by a new one, provided that the old model belongs to the same dimensional category as the new model to be produced.

Finally, the invention extends to the semifinished product and the models which can be obtained by means of the method described, as defined in claims 9 and 10.

Further features and advantages of the invention will become apparent from the following description of an embodiment, which is in no way limiting, and is provided purely by way of example, with reference to the figures of the attached drawings, in which:
- figures 1A and 1B illustrate schematically two different versions of a semifinished product according to the invention, which can be obtained by means of some steps of the method according to the invention;
- figure 1C illustrates in detail a step of the method according to the invention;
- figure 2 illustrates on a reduced scale a plan view from below of a component of a first version of the model according to the invention, which can be used in a wind tunnel;
- figures 3 and 4 illustrate respective details of a second version of the model according to the invention, which can be used for shows/exhibitions; and
- figures 5 and 6 illustrate respectively a detail and an elevated view in longitudinal cross-section of the said first version of the model according to the invention, which can be used for the tests in a wind tunnel.

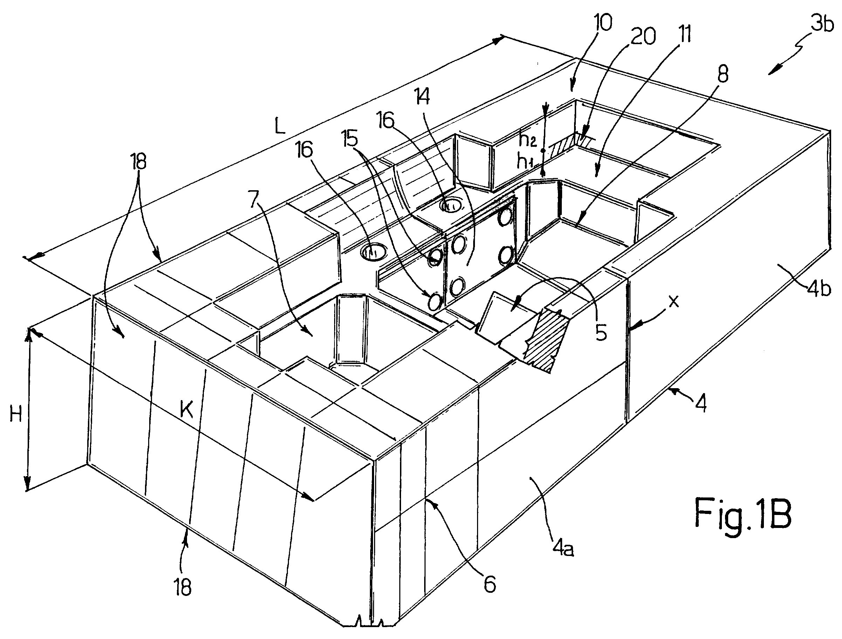

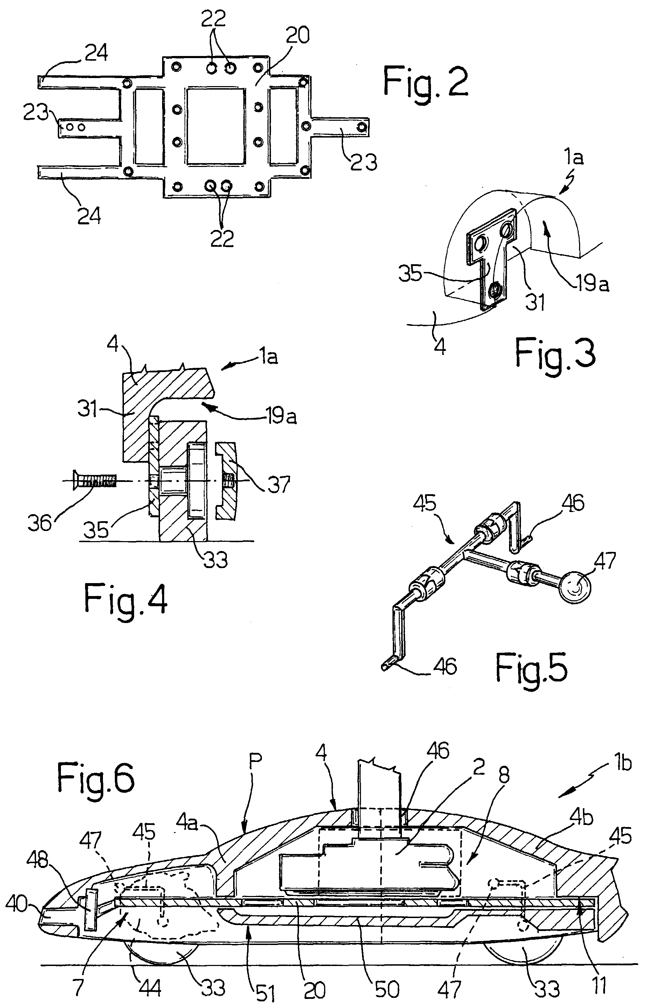

With reference to figure 6, 1b indicates as a whole a reduced-scale model (for example 1:3, or 1:4 or another scale) of any vehicle to be reproduced, and in the non-limiting case illustrated, a car; in particular the model 1b in figure 6 is suitable for use in simulating the performance of the scale vehicle in a known aerodynamic test, using test instrumentation 2 which is known and is therefore not described in detail.

For different requirements, for example simply for displays, as will be seen hereinafter it is also possible to produce a "simplified" version of the model according to the invention, indicated as 1a and illustrated in greater detail in figures 3 and 4. As will be seen, it is also possible to change easily from one version of the model according to the invention to the other, provided that both are characterised by the same "style", i.e. by the same bodywork profile P, and also to salvage old models which are no longer of use, which are of style P.

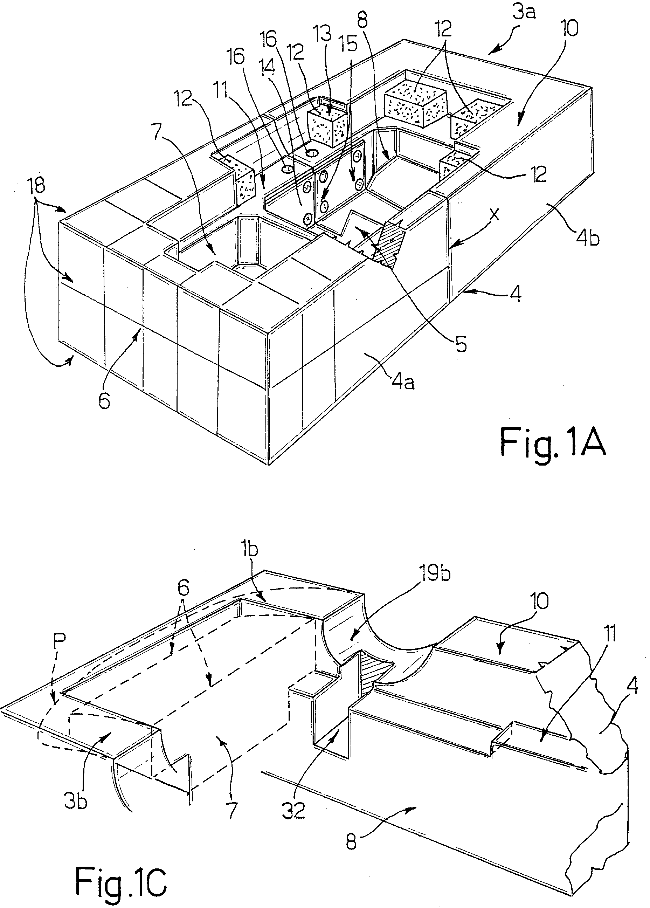

According to the invention, the models 1a, 1b are obtained as follows. Firstly, for example for each version 1a, 1b, a plurality of semifinished products 3 is produced; in particular, one or more semifinished products 3a, which are identical to one another, are produced (figure 1A), in order to produce different models 1a of the same category, which differ from one another only in the style P, and one or more semifinished products 3b, which are identical to one another (figure 1B), in order to produce different models 1b, which differ from one another only in the style P.

Each semifinished product 3a, 3b consists of a parallelepiped block 4 which has dimensions (width K, length L and height H, which for the sake of simplicity are indicated in figure 1B only), selected such that, according to the scale on which the model is to be produced, the dimensions are proportional to those of the category of vehicle to be reproduced. The dimensions K, H, L are preferably selected such that they are slightly larger than the corresponding dimensions to scale of the vehicle to be reproduced.

For example as is known, cars are subdivided into a series of commercial categories (known as "sections", and indicated by letters of the alphabet, for example category A, B, C-D, D-E, etc), which are characterised by standard bodywork dimensions, and optionally, for some dimensions, by the cylinder capacity ("combined" categories C-D and D-E). The dimensions H, K and L are therefore selected in the individual cases, such as to correspond to scale (apart from the said size increase) to those which are typical of the category of vehicle to be reproduced; there will therefore be semifinished products 3a, 3b of "category" A, B, C-D, D-E, i.e. which can be allocated the same reference as the category of vehicle of which they reproduce the standard dimensions, to scale and without prejudice to the aforementioned size increase. As will be described hereinafter, the size increase is used to cover with a semifinished product 3a, 3b of the same category (i.e. with pre-determined dimensions H, K, L) different style solutions P (for example a station-wagon and saloon version), such as to be able to obtain ultimately models 1a, 1b of different styles P, from semifinished products 3a, 3b which are all identical.

Each block 4 is produced, in any known manner, by forming from a synthetic plastics material which can easily be machined, and in particular by being milled: use is made for example of commercially available material such as "Cibatul®" or "Epowood®" (or other similar materials), selecting in each case a material which has a density such as to determine (by calculation) a final weight of the model 1a, 1b which is compatible with the use for which the model is destined.

Each block 4 is obtained as a single monolithic block, and is subsequently cut around the mid-point of its length L; in particular, according to a non-secondary aspect of the method according to the invention, each block 4 is produced by placing on it a three-dimensional reference grid 6, which is illustrated only partially in figures 1A, 1B, and subsequently by cutting the block transversely into two half-blocks 4a and 4b, according to a most appropriate cross-section at X (cutting plane), which belongs to the reference grid 6.

The two half-blocks 4a, 4b are then juxtaposed accurately head to head, and are secured to the working surface ("milling surface") of a numerical control milling machine (which is known, and for the sake of simplicity is not illustrated), in order to undergo a first milling machining process: in this step, one or more cavities, for example two cavities 7, 8, are produced inside each block 4, by being cut by milling on one face 10 of the block 4, which face is perpendicular to the cutting plane X and parallel and opposite to the milling surface, and in particular, as will be described hereinafter, is designed to form at least part of a lower face of the model 1a, 1b.

The cavity 8 is a cavity with a standard shape and dimensions, suitable for containing the instrumentation 2, which is identical for models 1 which reproduce any category of vehicle, whereas the cavity 7 is formed such as to reproduce to scale the average dimensions for the category of vehicle, corresponding to the measurements to scale H, L, K of block 4, of a "significant" part, if this is to be incorporated, of the engine space for this category of vehicle, where the term "significant part" has the meaning specified in the introductory part of this description.

Again during this first milling step, between each block 4 a stop and support surface 11 with predetermined dimensions is also produced. Depending on how this milling step is carried out, a semifinished product 3a or 3b is obtained from identical blocks 4; in fact, the semifinished product 3a differs from 3b (figure 1A and 1B) only in the presence of additional volumes 12 (shown in the form of speckled portions), which create inside the block 4 a second stop surface 13, which is parallel to 11, and is closer than 11 is to the face 10. It will be appreciated that the additional volumes 12 can be cut by milling, integrally with the block 4 (i.e. with the half-blocks 4a, 4b), or, according to a variant of the method according to the invention, they can be cut out as separate components and then added to a semifinished product 3b, for example by being glued. In this case, with obvious economies of scale, the first milling step provides a single type of semifinished product 3b, which, if necessary, can be converted into a semifinished product 3a simply by means of addition of the volumes 12.

When this first milling step is completed, the half-blocks 4a, 4b are released from the milling surface and are prepared for the successive steps, by being rendered mechanically integral in a monolithic and self-supporting manner with one another, with suitable support means also provided in order to avoid possible breakages. For this purpose the half-blocks 4a, 4b are provided with a dovetailing self-locking system, for example by means of one or more male-female dovetail joints 5, the components of which are made of metal and are attached to the half-blocks 4a, 4b, or are obtained by mechanical machining of the adjacent portions of the half-blocks 4a, 4b.

In addition, the half-blocks 4a, 4b are connected integrally to one another by means of respectively right and left lateral internal plates 14 (of which only one can be seen in the drawings), which are disposed perpendicularly to the stop surfaces 11, 13, astride the head to head joint plane X between the half-blocks 4a, 4b, and connected to the half-blocks themselves by means of removable connections means (screws or pins 15). In the surface 11, there are also provided cylindrical cavities 16 which, as can be seen, can accommodate suitable stop studs or pins.

At this point, the standard semifinished products 3, characterised by the presence of the cavities 7, 8, 16, the stop surfaces 11, 13, the joints 5, 14, and the dimensions H, K, L of the block 4 from which they are obtained, can be stored until there is a production requirement for a specific model 1, or they can be consigned directly to the successive steps. In fact, instead of keeping in the store the quantity of semifinished products 3 which may be necessary in a given period, the data for producing them can simply be stored, and they can be created simply on request, when they are needed (just-in-time methodology).

At this point, the monolithic assembly constituted by the half-blocks 4a, 4b, forming a semifinished product 3a, 3b which belongs to the dimensional category of the vehicle to be reproduced (i.e. with dimensions H, K, L which correspond to the standard dimensions of the section to which the vehicle to be reproduced belongs), is rotated by 180°, such as to turn towards the milling surface the face 10 with the cavities 7, 8, it is secured to the milling surface and is subjected to a second milling machining operation, during which outer surfaces 18 of the respective block 4 are shaped, and provided with the grid 6, such that the required forms of style P can be cut out, as well as respective recesses 19a (figures 3, 4) or 19b (figure 1C) for the wheel spaces, and, if included in the design, one or a plurality of air intakes 40 through the grille of the model (1b, figure 6). In this step the grid 6 is used to position the semifinished product 3a, 3b correctly on the milling surface, in accordance with the previous milling of the apertures or cavities 7, 8, 16.

Therefore, already during this second milling step, the method according to the invention is developed according to different steps, depending on whether a model 1a or 1b is to be obtained. In fact in the first case, only the recesses 19a are formed, which are not through recesses, and make it possible to obtain mock-ups of the wheel space, provided with internal walls 31 (figures 3 and 4); in the second case on the other hand, there are formed the through recesses 19b, the air intake(s) 40, and a slot 46 which is provided in the position of the separation section X between the half-blocks 4a, 4b, on the face of the block 4 which is parallel and opposite to the face 10.

Finally, in the position of the recesses 19b, respective inner lateral apertures 32 (figure 1C) must be produced, which open into the cavities 7, 8, and the function of which will be described hereinafter; these apertures 32 can be formed either during the second milling operation or during the first milling operation, and thus form part of the semifinished product 3b.

At this point, the method according to the invention comprises different steps in order to obtain the models 1a or 1b. In the first case, since the model is designed solely for display, the semifinished product 3a provided on the exterior of the style profile P is provided on its interior with support plates 14, and is completed by a flat (or curved) base which is of a known type and is not illustrated for the sake of simplicity, which is mounted and secured to the stop surface 13 defined by the volumes 12, and has respective wheels 33 attached, to scale, which are mounted in the wheel space defined by the blind recesses 19a by means of the T-shaped plates 35 (figures 3 and 4), which are secured directly to the walls 31 of the block 4 by means of screws (not shown), and to which plates 35 the wheels 33 are secured by means of a screw 36 and a dish-shaped nut 37 (figure 4). At this point, unless it is optionally to be painted, the model 1a is finished and ready for use.

On the other hand in the case of models 1b which are designed for technical tests, the semifinished product 3b (provided with the required style profile P, which does not have the volumes 12), has the inner plates 11 removed (such that the half-blocks 4a, 4b which constitute it remain connected to one another only by means of the dovetailing system 5), and is connected to a support plate 20 which has already been prepared and is suitable for constituting a support structure for the model 1b and for the test instrumentation 2.

The plate 20 is preferably made of aluminium, with a thickness h1 and a shape such that it can be inserted flush against the stop surface 11 (figure 1b) and provided with projecting tenons or pins 22, which can be inserted in the cavities 16, in order to provide both centring of the plate 20 in relation to the half-blocks 4a, 4b, and a further connection between the latter. In the non-limiting embodiment illustrated, which relates to car models, the plate 20 also has respective opposite portions 23 which project longitudinally, and, at the front, a pair of projections 24 which form a fork (figure 2), which, when the plate 20 is mounted on the block 4, is designed in use to project inside the cavity 7 in order to simulate the front side-members of the vehicle.

Thus in the method according to the invention, there are produced in series several types of plates 20, which differ from one another substantially only in their dimensions, each type being suitable to connect a semifinished product 3b which belongs to a specific category; for example, in the case of cars, only three plates 20 will be produced, one for category A, one for B and one for C-D or D-E (plus optionally others for special vehicles such as vans etc), and in order to obtain in each case the model 1b required, the same plate 20 will be connected to a semifinished product 3b which belongs to the same dimensional category as the plate, and in each case has the required style profile P. By this means, the same plate 20 is used for several models 1b.

According to the invention, all the accessory components of the model 1b to be obtained are mounted directly on the plate 20, before the latter is connected to the semifinished product 3b provided with the profile P, such as to obtain a sub-assembly which is pre-mounted and always ready, and can be used for all the models to be produced in the same dimensional category. In particular, on each plate model 20 there are mounted the wheels 33, which are rendered rotatable and the alignment of which can be varied, by being mounted by means of two axles 45 (figure 5), i.e. a front axle and a rear axle respectively; each axle 45 consists of a T-shaped component which is provided with two lateral pins 46, on each of which there is mounted idly (in a manner which is known and not illustrated) a wheel 33, and a ball joint 47, by means of which each axle 45 is secured in a tiltable manner to a respective projecting portion 23 of the plate 20, as illustrated in a broken line in figure 6, with the joint 47 facing forwards, i.e. in the direction of running of the vehicle (and during the test, in the direction of origin of the wind). Each axle 45 is preferably provided with three micrometric regulation devices 48 of a known type, which can regulate the transverse distance between the pins 46 (gauge) and the longitudinal distance between the joint 47 and the pins 46, such that, since the two axles 45 are mounted on the same plate 20 in fixed positions, the distance between the axles themselves (wheel base) can also be regulated. The movements of the axles 45 are permitted, with the plate 20 mounted on the semifinished product 3b provided with the profile P, by the additional apertures 32.

Before the plate 20 is mounted on the semifinished product 3b provided with the profile P, there is also fitted to the plate a scale mock-up of the power block 44, which for example is suspended from the extensions 24, and a scale mock-up of the radiator 48, which is made of suitably permeable materials and is suitably attached to the plate 20, for example by means of brackets. Finally, if a faithful reproduction of the vehicle bodywork base is to be obtained, by milling a second block 50, which is made of the same material as the block 4, a scale reproduction 51 of this bodywork base is formed, which, when it has been embellished with mock-ups which reproduce to scale the exhaust system, the tank etc, is then rendered integral with the support plate 20, on the side opposite that which is designed to be connected to the semifinished product 3b, such that when assembly has taken place, it occupies the space of height h2 (figure 1B), which is left free by the plate 20, between the surface 11 and the face 10. At this point the model 1b, as illustrated in figure 6, is finished and ready for use, and since an appropriate material has been selected for the block 4, it is not necessary to carry out any painting or other surface finishing.

The test tooling 2 is also mounted on the support plate 20, but only when the tests are carried out, since the model 1b can easily be dismantled/reassembled, and it is sufficient, in order to place the tooling 2 inside the cavity 8, to remove the plate 2 and release the dovetailing system 5, in order to separate temporarily the half-blocks 4a, 4b. Since the cavity 8 is always identical for all the models, and is designed by means of CAD and cut out by numerically controlled milling guided by the grid 6, correct fitting of the tooling 2 in the model can be taken for granted, even if it takes place on completion of all the machining operations on the model.

When the tests have been completed, the model 1b according to the invention can easily be converted into a model 1a; for this purpose it is necessary simply to remove the plate 20 (by this means also removing in a single operation all the accessory components such as the wheels, engine etc), and to replace the inner plates 14, which, in the absence of the plate 20, act as support components for the model, to stopper the half-blocks 4a, 4b in order to close the slot 46, optionally to render blind the recesses 19b and to render invisible the line X of separation between the half-blocks 4a, 4b, to replace the volumes 12 directly in the cavities 7, 8 in order to create the stop surface 13, and to put into position a flat base and the fixed wheels with the supports 35, as previously described.

It is apparent from the description provided that, with a minimum of additional machining, it is possible to change from a model 1a to a model 1b, since the two differ only in the presence/absence of the secondary details (volumes 12, air intakes 40, recesses 19a or 19b) and in the use as a support structure of the plates 14, or the plate 20. It is also apparent that it is possible to salvage a model 1 which has a style profile P which is no longer of interest, and to convert it into a new model with a different profile P. For this purpose it is in fact sufficient to add to the exterior of the semifinished product 3a or 3b provided with the old profile P, additional material, for example Epowood®, such as to restore outer surfaces 18 (even if these no longer form a parallelepiped), which can undergo new machining by milling in order to produce the new profile P.

## Claims

1. Method for production of reduced-scale models of vehicles, characterised in that it comprises the following steps:
- production, for each dimensional category of vehicle to be reproduced, of at least one block which is substantially parallelepiped and is made of a material which is relatively soft and workable, and preferably a synthetic plastics material, the block being formed with pre-determined dimensions which are proportional to the corresponding dimensions of the category of vehicle to be reproduced;
- subdivision of the block by transverse cutting into two half-blocks along a cutting plane;
- securing the two half-blocks juxtaposed head to head on a machining surface and execution of initial milling in order to cut one or more cavities from a first surface of the block, which is perpendicular to the cutting surface, and at least one stop surface, which is parallel to the said first face;
- providing the said half-blocks with reciprocal means of connection which consist of a system of self-locking dovetailing with one another;
- connecting the half-blocks to one another head to head by means of the said connection means and first, detachable reinforcement means, such as to reconstitute the said block and to form a semifinished product which has, to scale, substantially the dimensions of the vehicle to be reproduced;
- tilting the said semifinished product by 180°, securing it to a machining surface, and carrying out second milling on the outer surface of the block, in order to cut to scale from the latter a style profile for the vehicle to be reproduced; and
- connecting the necessary accessory components to the said semifinished product, which is provided with the said style profile.

2. Method according to claim 1, characterised in that each said semifinished product is produced by placing a three-dimensional reference grid on the said parallelepiped block: the said steps of milling and securing the block to the machining surface are carried out using the said reference grid, and a numerical control milling machine.

3. Method according to claim 1 or 2, characterised in that the said first detachable reinforcement means consist of a pair of lateral plates which are accommodated inside a said cavity cut out by means of the first milling operation, which plates are disposed perpendicularly to the said at least one stop surface, astride the head to head joining plane between the said half-blocks, and are connected to the latter by detachable connection means.

4. Method according to claim 3, characterised in that a second stop surface is cut out from the said semifinished product, parallel to the first and closer to the said first face, defined by a series of volumes which are disposed inside a said cavity, and are cut out integrally with the said block, or are added to the latter.

5. Method according to claim 4, characterised in that during the said second milling step, there are cut out from the said block respective blind recesses, which reproduce mock-ups of wheel spaces; the model is finished by means of the addition of a base, which is secured flush against the said second stop surface, and respective wheels, which are supported by T-shaped plates secured directly to the half-blocks, inside the said blind recesses.

6. Method according to one of claims 1 to 3, characterised in that after the second milling step, the said first detachable reinforcement means are removed and replaced by a self-supporting reinforcement plate, which is mounted flush against the said first stop surface, the said plate being provided with connection and centring pins or tenons, which are coupled with corresponding cavities of the half-blocks, cut out on both sides of the cutting plane.

7. Method according to claim 6, characterised in that the said accessory components for the model are all mounted on the said support plate, before the plate is connected to the said semifinished product, such as to define together with the said plate a sub-assembly which can be mounted on a plurality of semifinished products which are provided with different style profiles, but are derived from blocks which have the same original dimensions, in order to produce different models which belong to the same dimensional category.

8. Method according to claim 7, characterised in that the said accessory components comprise a scale model of the engine of the vehicle to be reproduced, a pair of axles which tilt on respective ball joints which support respective idle wheels, and are provided with micrometric devices in order to regulate the wheel base and gauge of the model, and a scale reproduction of a vehicle bodywork base, which is formed by milling a second block of the same material which forms the said parallelepiped block, and which is rendered integral with the said support plate, in the space defined between the latter and the said first face of the first block.

9. Method according to one of the preceding claims, characterised in that the dimensions of the said parallelepiped block are greater than the actual scale dimensions of the category of vehicle to be reproduced.

10. Semifinished product which can be used to obtain quickly scale models of vehicles, characterised in that it consists of a parallelepiped block of a synthetic plastics material which can easily be worked by a tool, the said block:
- having dimensions which are proportional to those specific to a predetermined category of vehicles to be reproduced;
- having a first face on which there have been formed by milling one or more cavities and at least one stop surface which is parallel to the said first face;
- being subdivided transversely, along a cutting plane which is perpendicular to the said first face, into two half-blocks which are connected to one another by a self-locking dovetailing system which is supported by the half-blocks themselves;
- being provided with internal, detachable reinforcement means, which connect the half-blocks to one another.

11. Scale model of a vehicle, which can be used for aerodynamic tests, characterised in that it comprises, in association:
- a block which is subdivided along a cutting plane into two half-blocks, which are attached to one another by means of self-locking dovetailing, made of a synthetic plastics material which can easily be worked by a tool, which has been milled on the interior and exterior in order to cut out, respectively, one or more internal cavities and a stop surface cut from a first face of the block, and the profile of the bodywork of the vehicle to be reproduced; and
- a support plate which constitutes the support frame of the model, and supports test instrumentation and all the accessory components of the model, such as the wheels, the axles and the scale reproduction of the various mechanical parts, the said plate being attached integrally to the said milled block, flush against the said stop surface, by means of mechanical connection components which are supported by the plate and inserted in cavities or apertures provided in the said half-blocks, on both sides of the cutting plane.
